# EUROPEAN PATENT SPECIFICATION

(11) **EP 3 616 893 B1**
(45) Date of publication and mention of the grant of the patent: **16.12.2020**
(21) Application number: 17907515.5
(22) Date of filing: 01.08.2017
(51) Int. Cl.: B29D 30/24, B29D 30/26

(54) **TIRE BUILDING DRUM**
REIFENFORMWALZE
TAMBOUR DE FORMATION DE PNEUS

(30) Priority: 26.04.2017 CN 201710282419; 26.04.2017 CN 201720448367 U
(43) Date of publication of application: 04.03.2020
(73) Proprietor: QINGDAO SENTURY TIRE CO., LTD., Qingdao, Shandong 266000 (CN)
(72) Inventor: PAN, Youshang, Qingdao Shandong 266000 (CN); YIN, Haitao, Qingdao Shandong 266000 (CN); LIU, Bingbao, Qingdao Shandong 266000 (CN)
(74) Representative: J A Kemp LLP
(86) International application number: PCT/CN2017/095361
(87) International publication number: WO 2018/196210

(56) References cited:
- EP-A1- 3 037 249
- CN-A- 1 792 623
- CN-A- 106 903 915
- US-A- 3 784 437
- US-A1- 2016 001 514

## Description

### TECHNICAL FIELD

The present application relates to the technical field of tire manufacturing, and specifically to a building drum and a pair of side rings thereof.

### BACKGROUND ART

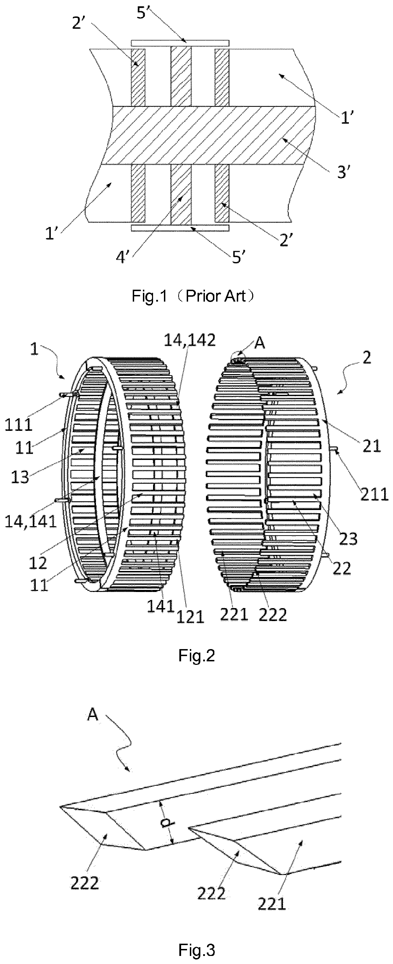

At present, many domestic and imported one-stage building machines process a semi-finished tire by using a combination of side rings and a central cover plate; in the prior art, as shown in Figure 1, a building drum 1' of a one-stage building machine is connected to side rings 2', the building drum 1' is internally provided with a central shaft 3', the central shaft 3' is provided with a central bracket 4' thereon, and a periphery of the central bracket 4' is provided with a central cover plate 5'; the central cover plate 5' covers the side rings 2', the side rings 2' moves under the central coverplate5' as the building drum 1' disengaged and engaged; such a structural setting causes the following problems:
(1) In order to process tires in different sizes, it is necessary to replace size of the side rings 2', the center bracket 3' and the center cover plate 5' at the same time when change the size of the building drum, and the replacement thereof takes a long time, which affects work efficiency;
(2) During an attaching process of the semi-finished tire, a semi-finished product needs to be attached to the central cover plate 5' and the side rings 2', since the central cover plate 5' and the side rings 2' are not on a same circumference, there is a distance between a circumference of the central cover plate 5' and a circumference of the side rings 2', thereby making the sizes of joint of the semi-finished product be inconsistent; especially when the semi-finished product is attached on the building drum, the joint of the middle part (on the central cover plate) are small, while the joint of other parts are larger, which directly affects the quality of the tire and the qualification rate thereof;

In the prior art, in order that the size difference of the joint on the building drum is minimized and the problem of joint defect is improved, a thinner central cover plate is often used, and the thickness is about 1.3 mm; however, this causes a new problem: on one hand, when the tire is built, a lower pressing roller presses against the joint, the central cover plate is easily deformed after a period of use, and since the side rings are located on an inner side of the central cover plate, the side rings are worn, which makes the maintenance cost high and affects the quality of the tire; on the other hand, the cost of manufacturing a thinner central cover plate is also higher.

EP3037249A1 discloses a tire building drum includes a rotatable drum 5 having a center section; said center section comprises a plurality of center segments.

US20160001514A1 discloses a tire building drum for the production of a green tire, the tire building drum is equipped with a core clamping means and a core fixing means, the tire building drum is formed from a central part 9, 10 and from two drum halves 4, 5 arranged adjacent to the central part on both sides.

US3784437A discloses a tire building apparatus including a tire building drum comprises a pair of end members 20, each including a tubular member or sleeve 22 slidably mounted in coaxial relation upon the shaft 14 and a web 24 extending radially outward from the sleeve 22 and terminating in a rigid tubular cylindrical member or shell 26 providing a rigid exterior cylindrical surface 30.

### SUMMARY OF THE INVENTION

In order to solve the above problems of a building drum in the prior art, the present application provides a building drum having a pair of side rings, which makes building machines easy to operate, requires no frequent replacement of a component, and the problem of joint defect is improved.

The present application employs the following technical solutions.

A first aspect of the present application provides a building drum, comprising a first mounting portion and a second mounting portion, according to claim 1.

Compared with the prior art, the pair of side rings disclosed in the present application which can be cross-fitted with each other may replace a structure consisting of side rings, a central cover plate and a central bracket in the prior art; thus, the present application at least has following three advantages:
(1) When a semi-finished product is forming a joint on the side rings, the size of the joint is consistent due to the consistent radius of the outer circumference, which greatly improves the quality of a product;
(2) The side rings of different sizes may be mounted on the building drum according to the size of the semi-finished product produced, the replacement of the side rings is convenient, the replacement time of the size of the building machine is shortened, and the production efficiency of the equipment is improved;
(3) The structure of a whole device is simpler, the maintenance is convenient, and the maintenance cost is lower.

### BRIEF DESCRIPTION OF THE DRAWINGS

Figure 1 is a schematic structural view of a building drum in the prior art;
Figure 2 is a schematic structural view of a pair of side rings at a separated state in Embodiment 1;
Figure 3 is an enlarged view of a portion A in Figure 2;
Figure 4 is a schematic structural view of the pair of side rings at a cross-fitted state in Embodiment 1;
Figure 5 is a schematic structural view of a first side ring in Embodiment 2;
Figure 6 is an enlarged view of a portion B of in Figure 5;
Figure 7 is a schematic structural view of a building drum when the building drum is separated;
Figure 8 is an enlarged view of the middle portion of the building drum in Figure 7;
Figure 9 is a schematic structural view of the building drum when the building drum is closed;
Figure 10 is an enlarged view of the middle portion of the building drum in Figure 9;

in which:
1': building drum, 2': side ring, 3': central shaft, 4': central bracket, 5': central cover plate;
1: first side ring, 11: first annular portion, 111: first mounting connection portion, 12: first tooth-shaped portion, 121: cantilever end, 122: side surface, 13: first tooth gap, 14: blocking component, 141: first support ring, 142: second support ring, 143 first blocking component;
2: second side ring, 21: second annular portion, 211: second mounting connection portion, 22: second tooth-shaped portion, 221: cantilever end, 222: side surface, 23: second tooth gap, 24: blocking component, 243: second blocking component;
3: building drum, 31: first mounting part, 32: second mounting part, 33 central shaft

### DETAILED DESCRIPTION OF THE INVENTION

The technical solutions of the present application are described in detail below with reference to the specific implementations, however, it should be understood that elements, structures, and features of one implementation may be beneficially incorporated into other implementations without further recitation.

A building drum, comprising a first mounting portion and a second mounting portion;

The first mounting portion is connected to a first side ring, the second mounting portion is connected to a second side ring, and the first side ring and the second side ring form a pair of side rings;
the first side ring comprises a first annular portion, a first side of the first annular portion is connected to the first mounting portion, a second side of the first annular portion is provided with a plurality of first tooth-shaped portions along a circumference of the first annular portion, a first tooth gap is formed between every two adjacent of the first tooth-shaped portions;
the second side ring comprises a second annular portion, a first side of the second annular portion is connected to the second mounting portion, a second side of the second annular portion is provided with a plurality of second tooth-shaped portions along a circumference of the second annular portion, a second tooth gap is formed between every two adjacent of the second tooth-shaped portions;
an outer circumferential radius of the first tooth-shaped portions is substantially equal to an outer circumferential radius of the second tooth-shaped portions, and the first tooth-shaped portions may be cross-fitted with the second tooth-shaped portions.

Due to the side rings move on the building drum to disengage or engage, the pair of side rings are cross-fitted in an intersection manner, which solves the collision problem of the building drum during disengagement and engagement; the movement of the building drum may be controlled by electromechanical operation program in the prior art, the intersection and separation of the pair of side rings are controlled by controlling over the movement state of the building drum.

In one pair of side rings, the side rings and the building drum may be connected in a detachable manner, such as a screw connection, a bolt connection, or the like; or a non-detachable connection, such as welding, riveting, or the like. According to the requirements of semi-finished products in different size, the pair of side rings in the different size may be arranged on the building drum; since the building size of the semi-finished product may be adjusted by replacing the pair of side rings on the building drum, preferably, the pair of side rings are mounted on the building drum by adoption of a detachable manner.

The first tooth-shaped portions and the second tooth-shaped portions substantially form one cylindrical body after being cross-fitted with each other; when being built, the semi-finished product is located on an outer circumference of the substantially same radius of the cylindrical body, and size of the joint produced when the semi-finished product is pressed and engaged by a pressing roller are the same and uniform.

As a preferred implementation, when being cross-fitted, the first tooth-shaped portions and the second tooth-shaped portions are tightly fitted together, so that bubbles in an inner liner of the semi-finished product may be reduced; for example, by controlling a gap produced between the first tooth-shaped portion and the adjacent second tooth-shaped portion after the two cross-fitted with each other to be between 1-2 mm or less; that is, less than or equal to 2 mm.

As a preferred implementation, each of the first tooth-shaped portions and the second tooth-shaped portions have a radial thickness of 4-10 mm, preferably 5-8 mm, which may effectively support pressure to prevent the deformation of the pair of side rings. Lengths of the first tooth-shaped portions and the second tooth-shaped portions are determined according to the actual sizes of tires produced; in order to achieve a purpose of improving the joint, compared to the prior art, the present application adopt an idea of lengthening the side rings and replace a central cover plate and side rings of the prior art at the same time.

As a preferred implementation, the first side ring and/or the second side ring are provided with blocking components, each of the blocking components is located on an inner side of the tooth gap between every two adjacent of the tooth-shaped portions to prevent downward deformation of the second tooth-shaped portions or the first tooth-shaped portions that are opposite to the blocking components. Two specific implementations are provided below, but the present application is not limited thereto.
(1) Specifically, as an embodiment, at least one support ring is arranged on an inner circumference of the first tooth-shaped portions, and the support ring is annular. For example, a first support ring may be arranged in middle of the first tooth-shaped portions, and a second support ring may be arranged on cantilever ends of the first tooth-shaped portions; the support rings are the aforementioned blocking components. The support rings is arranged on one hand to consolidate the first tooth-shaped portions themselves from the inner side to prevent deformation, on the other hand, when the first tooth-shaped portions and the second tooth-shaped portions are cross-fitted, the second tooth-shaped portions are located on an outer circumference of the support rings, the support rings also plays a role of supporting the second tooth-shaped portions to prevent the second tooth-shaped portions from being deformed downward. The support rings are arranged so that the entire pair of side rings has a stronger structure and a longer service life.
   Preferably, each of the second tooth-shaped portions has a cantilever end, a side surface of the cantilever end is provided as an inclined surface, the inclined surface faces an inner side of a circumference of the second tooth-shaped portions. When the first tooth-shaped portions and the second tooth-shaped portions are cross-fitted, if one of the second tooth-shaped portions is slightly deformed inward due to being pressed, a front end thereof may be slightly upwardly supported by the inclined surface and placed on the support rings so as to prevent the second tooth-shaped portion from being blocked by the side surface of the support rings due to downward deformation and cannot move to the support rings.
(2) Specifically, as another embodiment, the first annular portion is provided with a plurality of first blocking components, each of the first blocking components is located between two adjacent of the first tooth-shaped portions, and located on the inner side of the first tooth gaps; the second annular portion is provided with a plurality of second blocking components, each of the second blocking components is located between two adjacent of the second tooth-shaped portions and located on the inner side of the second tooth gaps. When the first tooth-shaped portions and the second tooth-shaped portions are cross-fitted, the first blocking components are located on an inner side of the second tooth-shaped portions, and the second blocking components are located on an inner side of the first tooth-shaped portions; thus, the first blocking components may prevent the second tooth-shaped portions from being pressed to be deformed downward, and the second blocking components may prevent the first tooth-shaped portions from being pressed to be deformed downward. In the present embodiment, the first side ring and the second side ring may be substantially the same in the structures thereof and can cross-fitted with each other, thus more advantageous for mass production.
Preferably, each of the first tooth-shaped portions has a cantilever end, a side surface of the cantilever end is provided as an inclined surface, the inclined surface faces an inner side of a circumference of the first tooth-shaped portions; each of the second tooth-shaped portions has a cantilever end, aside surface of the cantilever end is provided as an inclined surface, the inclined surface faces an inner side of a circumference of the second tooth-shaped portions. When the first tooth-shaped portions and the second tooth-shaped portions are cross-fitted, if one of the tooth-shaped portions is slightly deformed inward, a front end thereof may be slightly supported upward against the inclined surface and placed on the blocking component, so that the surface of the cylindrical body after intersected is uniform.

A pair of side rings used for mounting on a building drum, the pair of side rings comprises a first side ring and a second side ring;
the first side ring comprises a first annular portion, one side of the first annular portion is provided with a plurality of first tooth-shaped portions along a circumference of the first annular portion, and a first tooth gap is formed between every two adjacent of the first tooth-shaped portions;
the second side ring comprises a second annular portion, one side of the second annular portion is provided with a plurality of second tooth-shaped portions along a circumference of the second annular portion, and a second tooth gap is formed between every two adjacent of the second tooth-shaped portions;
an outer circumferential radius of the first tooth-shaped portions is substantially equal to an outer circumferential radius of the second tooth-shaped portions, and the first tooth-shaped portions may be cross-fitted with the second tooth-shaped portion.

The first annular portion and the second annular portion are each provided thereon with mounting connection portions, the mounting connecting portions may be mounting holes or other conventional mounting components, which may be used for mounting the first side ring and the second side ring on other components.

After the first tooth-shaped portions and the second tooth-shaped portions are cross-fitted with each other, the pair of side rings substantially forms a cylindrical body. As a preferred embodiment, when being cross-fitted, the first tooth-shaped portions and the adjacent second tooth-shaped portions are closely fitted together, for example, by controlling gaps between the first tooth-shaped portions and the second tooth-shaped portions after the two cross-fitted with each other to be between 1-2 mm or less; that is, less than or equal to 2 mm.

As a preferred implementation, each of the first tooth-shaped portions and the second tooth-shaped portions have a radial thickness of 4-10 mm, preferably 5-8 mm, which may effectively support pressure to prevent deformation of the pair of side rings. Length of the first tooth-shaped portions and the second tooth-shaped portions are determined according to actual working conditions; for example, for the building drum, the lengths of the first tooth-shaped portions and the second tooth-shaped portions are an extension of side rings in the prior art, and may effectively replace a central cover plate and side rings in the prior art at the same time.

As a preferred implementation, the first side ring and/or the second side ring are provided with blocking components, each of the blocking components is located on an inner side of the tooth gap between two adjacent of the tooth-shaped portions to prevent downward deformation of the second tooth-shaped portions or the first tooth-shape portions that are opposite to the blocking components; two specific implementations are provided below, but the present application is not limited thereto:
(1) Specifically, as an embodiment, at least one support ring is arranged on an inner circumference of the first tooth-shaped portions, the support ring is annular; for example, the middle of the first tooth-shaped portions may be provided with a first support ring, a second support ring is arranged at cantilever ends of the first tooth-shaped portions. Preferably, each of the second tooth-shaped portions has a cantilever end, a side surface of the cantilever end is an inclined surface, and the inclined surface faces an inner side of a circumference of the second tooth-shaped portions.
(2) Specifically, as another implementation, the first annular portion is provided with a plurality of first blocking components, each of the first blocking components is located between two adjacent of the first tooth-shaped portions, and located on the inner side of the first tooth gaps; the second annular portions are provided with a plurality of second blocking components, each of the second blocking components is located between two adjacent of the second tooth-shaped portions and located on the inner side of the second tooth gaps. When the first tooth-shaped portions and the second tooth-shaped portions are cross-fitted, the first blocking components are located on an inner side of the second tooth-shaped portions, and the second blocking components are located on an inner side of the first tooth-shaped portions. Preferably, each of the first tooth-shaped portions has a cantilever end, aside surface of the cantilever end is provided as an inclined surface, the inclined surface faces an inner side of a circumference of the first tooth-shaped portions. Each of the second tooth-shaped portions has a cantilever end, a side surface of the cantilever end is provided as an inclined surface, and the inclined surface faces an inner side of a circumference of the second tooth-shaped portions.

The present application is explained in detail below in conjunction with the embodiments. In the description of the present application, it should be noted that the terms "first" and "second" are used for descriptive purposes only, and are not to be construed as indicating or implying relative importance; the "inner side" or "outer circumference" and the like are all described with respect to the direction of a circumference in which the tooth-shaped portions are located, and the direction facing center of the circumference is referred as inner.

The embodiments are merely described for the preferred embodiments of the present application, and are not intended to limit the scope of the present which is defined by the claims of the present application.

### Embodiment 1

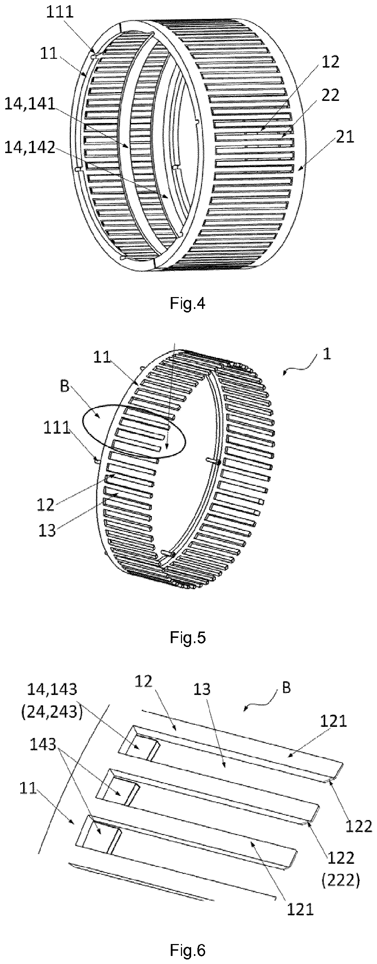

As shown in Figures 2-4, a pair of side rings comprises a first side ring (1) and a second side ring (2); the first side ring (1) comprises a first annular portion (11), one side of the first annular portion is provided with a plurality of first tooth-shaped portions (12) along a circumference of the first annular portion; the second side ring (2) comprises a second annular portion (21), one side of the second annular portion is provided with a plurality of second tooth-shaped portions (22) along a circumference of the second annular portion; an outer circumferential radius of the first tooth-shaped portions (12) and an outer circumferential radius of the second tooth-shaped portions (22) are substantially equal, and the first tooth-shaped portions (12) and the second tooth-shaped portions (22) may be cross-fitted with each other. Tooth gaps (13, 23) are formed between every adjacent tooth-shaped portions; when being cross-fitted, it is obvious that the first tooth-shaped portions (12) are located in the second tooth gap (23) of the second tooth-shaped portions, the second tooth-shaped portions (22) are located in the first tooth gaps (13) of the first tooth-shaped portions; the first tooth-shaped portions (12) and the second tooth-shaped portions (22) are closely fitted with gaps of less than 2 mm to form a cylindrical body as shown in Figure 4.

As shown in Figure 2, another side of the first annular portion (11) may be provided with first mounting connection portions (111), and another side of the second annular portion (21) is provided with second mounting connection portions (211), the mounting connection portions (111, 211) may be mounting holes or other connection components that may be used for mounting, which are respectively used for mounting the first side ring (1) and the second side ring (2) on other components.

As shown in Figure 3, a radial thickness d of each of the first tooth-shaped portions (12) and the second tooth-shaped portions (22) is approximately 5 mm, and a length thereof is equivalent to the total horizontal length of a central cover plate 5' and side rings 2' in the prior art.

A blocking component (14) is arranged on an inner circumference of the first tooth-shaped portions (12), comprising a first support ring (141) located at the middle of the first tooth-shaped portion (12) and a second support ring (142) located at cantilever ends of the first tooth-shaped portions (121), the first support ring (141) and the second support ring (142) are both annular and supported the first tooth-shaped portions (12)at an inner side as shown in Figure 2.

Each of the second tooth-shaped portions (22) has a cantilever end (221), and aside surface (222) of the cantilever end is an inclined surface, the inclined surface substantially faces a central direction of a circumference in which the second tooth-shaped portion is located, as shown in Figure 3.

### Embodiment 2

A pair of side rings comprises a first side ring (1) and a second side ring (2). In this embodiment, since the structures of the first side ring (1) and the second side ring (2) are the same or similar, so only the view of the first side ring (1) is provided, as shown in Figures 5 and Figure 6 in details, the structure of the second side ring (2) may also refer to that of the second side ring (2) in Figure 2. The first side ring (1) comprises a first annular portion (11), one side of the first annular portion is provided with a plurality of first tooth-shaped portions (12) along a circumference of the first annular portion, the second side ring (2) comprises a second annular portion (21), one side of the second annular portion is provided with a plurality of second tooth-shaped portions (22) along a circumference of the second annular portion; an outer circumferential radius of the first tooth-shaped portions (12) is substantially equal to an outer circumferential radius of the second tooth-shaped portions (22), and the first tooth-shaped portions (12) and the second tooth-shaped portions (22) may be cross-fitted with each other. Tooth gaps (13, 23) are formed between every adjacent tooth-shaped portions, the first tooth-shaped portions (12) are located in second tooth gaps (23) of the second tooth-shaped portions; the second tooth-shaped portions (22) are located in first tooth gaps (13) of the first tooth-shaped portions; the first tooth-shaped portions (12) and the second tooth-shaped portions (22) are closely fitted with gaps of less than 1 mm to form a cylindrical body.

As shown in Figure 5, another side of the first annular portion (11) is provided with first mounting connection portions (111), and another side of the second annular portion (21) is provided with second mounting connection portions (211), the mounting connection portions (111, 211) may be convex connection posts that may be used for mounting the first side ring (1) and the second side ring (2) on other components, respectively.

A radial thickness d of each of the first tooth-shaped portions (12) and the second tooth-shaped portions (22) is approximately 8 mm;

The first side ring (1) and the second side ring (2) are both provided thereon with blocking components (14, 24), as shown in Figure 6, in order to facilitate understanding of the structure of the second side ring (2), the numbers in the brackets are shown the components of the second side ring (2). Specifically, the first annular portions (11) are provided with a plurality of first blocking components (143), each of the first blocking components (143) is located between two adjacent of the first tooth-shaped portions (12) and located on an inner side of the first tooth gaps (13); the second annular portions (21) are provided with a plurality of second blocking components (243), each of the second blocking components (243) is located between two adjacent of the second tooth-shaped portions (22) and located on an inner side of the second tooth gaps (23); when the first tooth-shaped portions (12) are cross-fitted (22) with the second tooth-shaped portions, the first blocking components (143) are located on an inner side of the second tooth-shaped portions, the second blocking components (243) are located on an inner side the first tooth-shaped portions.

Each the first tooth-shaped portion (12) has a cantilever end (121), aside surface (122) of the cantilever end is an inclined surface, and the inclined surface may substantially face a central direction of a circumference in which the first tooth-shaped portions are located; each of the tooth-shaped portions (22) also has a cantilever end (221), aside surface (222) of the cantilever end is an inclined surface, the inclined surface may substantially face a central direction of a circumference in which the second tooth is located.

It should be noted that the blocking components in Embodiment 1 and Embodiment 2 may also be used in exchange, for example, the first side ring (1) is provided with the first supporting ring (141) and the first blocking components (143) at the same time, the second side ring (2) is provided with the second blocking components (243), and the second supporting ring (142) is omitted here because the second supporting ring (142) may interact with the second blocking components (243); in this case, it is also conceivable to arrange the second support ring (142) in a direction approaching the first annular portion (11) to prevent the occurrence of blocking.

### Embodiment 3

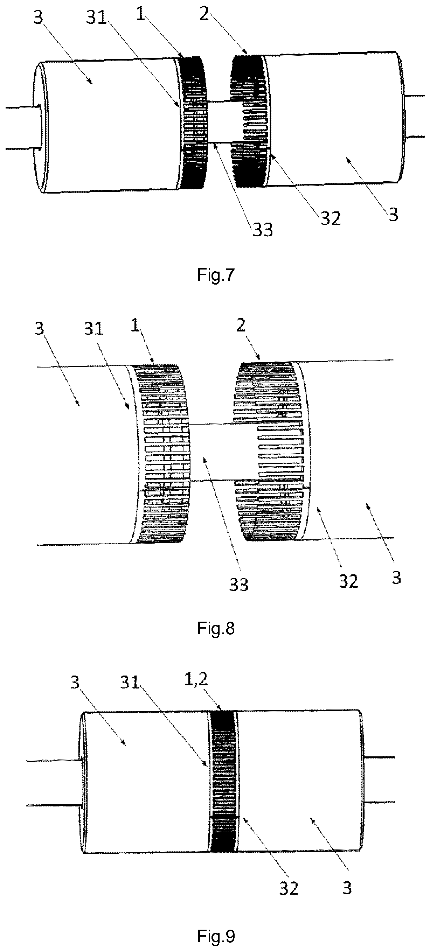

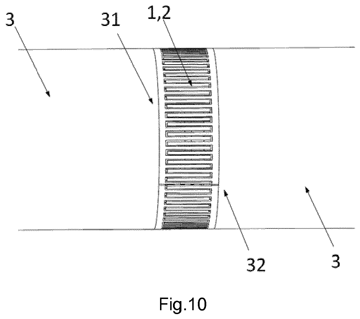

A building drum (3) with a pair of side rings comprises a first mounting portion (31), a second mounting portion (32) and the a pair of side rings, as shown in Figures 7-10; the two ends of the building drum (3) are connected together in series via a central shaft (33); the pair of side rings are as described in Embodiment 1.

The first side ring (1) is mounted on the first mounting portions (31) via first mounting connection portions (111), and the second side ring (2) is mounted on the second mounting portion (32) via second mounting connection portions (211).

### Embodiment 4

A building drum (3) with a pair of side rings comprises a first mounting portion (31), a second mounting portion (32) and the pair of side rings; two ends of the building drum (3) are connected together in series via a central shaft (33); the pair of side rings is as described in Embodiment 2.

The first side ring (1) is mounted on the first mounting portion (31) via first mounting connection portions (111), and the second side ring (2) is mounted on the second mounting portion (32) via second mounting connection portions (211).

## Claims

1. A building drum (3), comprising a first mounting portion (31) and a second mounting portion (32), the first mounting portion (31) is connected to a first side ring (1), the second mounting portion (32) is connected to a second side ring (2), and the first side ring (1) and the second side ring (2) form a pair of side rings,
the first side ring (1) comprises a first annular portion (11), a first side of the first annular portion is connected to the first mounting portion (31), a second side of the first annular portion is provided with a plurality of first tooth-shaped portions (12) along a circumference of the first annular portion (11), a first tooth gap (13) is formed between every two adjacent of the first tooth-shaped portions (12);
the second side ring (2) comprises a second annular portion (21), a first side of the second annular portion is connected to the second mounting portion (32), a second side of the second annular portion is provided with a plurality of second tooth-shaped portions (22) along a circumference of the second annular portion (21), a second tooth gap (23) is formed between every two adjacent of the second tooth-shaped portions (22);
an outer circumferential radius of the first tooth-shaped portions (12) is equal to an outer circumferential radius of the second tooth-shaped portions (22), and the first tooth-shaped portions (12) are capable of being cross-fitted with the second tooth-shaped portions (22) to form a cylindrical body having a uniform surface, **characterised in that**;
when cross-fitted, the first tooth-shaped portions (12) and the second tooth-shaped portions (22) are tightly fitted together, and a gap between every two adjacent of the first tooth-shaped portions (12) and the second tooth-shaped portions (22) is 1-2mm; each of the first tooth-shaped portions (12) and the second tooth-shaped portions (22) have a radial thickness d of 5-8 mm.

2. The building drum according to claim 1, characterize in that, the side rings are connected to the building drum (3) in a detachable manner.

3. The building drum according to any one of claims 1-2, characterize in that, the first side ring (1) and/or the second side ring (2) are provided with a blocking component (14, 24), the blocking component (14, 24) is located on an inner side of the tooth gap (13, 23) between every two adjacent of the tooth-shaped portions.

4. The building drum according to claim 1, characterize in that, the blocking component (14) is at least one support ring (141, 142) arranged on an inner circumference of the first tooth-shaped portions (12), and the support ring is annular.

5. The building drum according to claim 4, characterize in that, each of the second tooth-shaped portions (22) has a cantilever end (221), a side surface (222) of the cantilever end is provided as an inclined surface, the inclined surface (222) faces an inner side of a circumference of the second tooth-shaped portions (22).

6. The building drum according to claim 1, characterize in that,
the first annular portion (11) is provided with a plurality of first blocking components (143), each of the first blocking components (143) is located between two adjacent of the first tooth-shaped portions (12) and located on the inner side of the first tooth gaps (13);
the second annular portion (21) is provided with a plurality of second blocking components (243), each of the second blocking components (243) is located between two adjacent of the second tooth-shaped portions (22) and located on the inner side of the second tooth gaps (23).

7. The building drum according to claim 6, characterize in that,
each of the first tooth-shaped portions (12) has a cantilever end (121), a side surface (122) of the cantilever end is provided as an inclined surface, the inclined surface faces an inner side of a circumference of the first tooth-shaped portions (12);
each of the second tooth-shaped portions (22) has a cantilever end (221), a side surface (222) of the cantilever end is provided as an inclined surface, the inclined surface faces an inner side of a circumference of the second tooth-shaped portions (22).

## Patentansprüche

1. Aufbautrommel (3), umfassend einen ersten Montageabschnitt (31) und einen zweiten Montageabschnitt (32), wobei der erste Montageabschnitt (31) mit einem ersten Seitenring (1) verbunden ist, der zweite Montageabschnitt (32) mit einem zweiten Seitenring (2) verbunden ist und der erste Seitenring (1) und der zweite Seitenring (2) ein Paar Seitenringe bilden,
wobei der erste Seitenring (1) einen ersten ringförmigen Abschnitt (11) umfasst, eine erste Seite des ersten ringförmigen Abschnitts mit dem ersten Montageabschnitt (31) verbunden ist, eine zweite Seite des ersten ringförmigen Abschnitts mit einer Vielzahl von ersten zahnförmigen Abschnitten (12) entlang eines Umfang des ersten ringförmigen Abschnitts (11) bereitgestellt ist, eine erste Zahnlücke (13) zwischen allen zwei benachbarten der ersten zahnförmigen Abschnitte (12) gebildet ist;
wobei der zweite Seitenring (2) einen zweiten ringförmigen Abschnitt (21) umfasst, eine erste Seite des zweiten ringförmigen Abschnitts mit dem zweiten Montageabschnitt (32) verbunden ist, eine zweite Seite des zweiten ringförmigen Abschnitts mit einer Vielzahl von zweiten zahnförmigen Abschnitten (22) entlang eines Umfang des zweiten ringförmigen Abschnitts (21) bereitgestellt ist, eine zweite Zahnlücke (23) zwischen allen zwei benachbarten der zweiten zahnförmigen Abschnitte (22) gebildet ist;
wobei ein Außenumfangsradius der ersten zahnförmigen Abschnitte (12) gleich einem Außenumfangsradius der zweiten zahnförmigen Abschnitte (22) ist und die ersten zahnförmigen Abschnitte (12) in der Lage sind, mit den zweiten zahnförmigen Abschnitten (22) kreuzverschraubt zu sein, um einen zylindrischen Körper zu bilden, der eine einheitliche Oberfläche hat, **dadurch gekennzeichnet, dass**;
wenn sie kreuzverschraubt sind, die ersten zahnförmigen Abschnitte (12) und die zweiten zahnförmigen Abschnitte (22) fest zusammengefügt sind, und eine Lücke zwischen allen zwei benachbarten der ersten zahnförmigen Abschnitte (12) und der zweiten zahnförmigen Abschnitte (22) 1-2 mm beträgt; wobei jeder der ersten zahnförmigen Abschnitte (12) und der zweiten zahnförmigen Abschnitte (22) eine radiale Dicke d von 5-8 mm haben.

2. Aufbautrommel nach Anspruch 1, **dadurch gekennzeichnet, dass** die Seitenringe mit der Aufbautrommel (3) auf eine lösbare Weise verbunden sind.

3. Aufbautrommel nach einem der Ansprüche 1-2, **dadurch gekennzeichnet, dass** der erste Seitenring (1) und/oder der zweite Seitenring (2) mit einer Sperrkomponente (14, 24) bereitgestellt sind, wobei die Sperrkomponente (14, 24) an einer Innenseite der Zahnlücke (13, 23) zwischen allen zwei benachbarten der zahnförmigen Abschnitte angeordnet ist.

4. Aufbautrommel nach Anspruch 1, **dadurch gekennzeichnet, dass** die Sperrkomponente (14) mindestens ein Stützring (141, 142) ist, der auf einem Innenumfang der ersten zahnförmigen Abschnitte (12) angeordnet ist, und der Stützring ringförmig ist.

5. Aufbautrommel nach Anspruch 4, **dadurch gekennzeichnet, dass** jeder der zweiten zahnförmigen Abschnitte (22) ein Auslegerende (221) hat, eine Seitenfläche (222) des Auslegerendes als eine geneigte Fläche bereitgestellt ist, die geneigte Fläche (222) einer Innenseite eines Umfang der zweiten zahnförmigen Abschnitte (22) zugewandt ist.

6. Aufbautrommel nach Anspruch 1, **dadurch gekennzeichnet, dass**
der erste ringförmige Abschnitt (11) mit einer Vielzahl von ersten Sperrkomponenten (143) bereitgestellt ist, wobei jede der ersten Sperrelemente (143) zwischen zwei benachbarten der ersten zahnförmigen Abschnitte (12) angeordnet ist und auf der Innenseite der ersten Zahnlücken (13) angeordnet ist;
der zweite ringförmige Abschnitt (21) mit einer Vielzahl von zweiten Sperrkomponenten (243) bereitgestellt ist, wobei jede der zweiten Sperrelemente (243) zwischen zwei benachbarten der zweiten zahnförmigen Abschnitte (22) angeordnet ist und auf der Innenseite der zweiten Zahnlücken (23) angeordnet ist.

7. Aufbautrommel nach Anspruch 6, **dadurch gekennzeichnet, dass**
jeder der ersten zahnförmigen Abschnitte (12) ein Auslegerende (121) hat, eine Seitenfläche (122) des Auslegerendes als eine geneigte Fläche bereitgestellt ist, die geneigte Fläche einer Innenseite eines Umfang der ersten zahnförmigen Abschnitte (12) zugewandt ist;
jeder der zweiten zahnförmigen Abschnitte (22) ein Auslegerende (221) hat, eine Seitenfläche (222) des Auslegerendes als eine geneigte Fläche bereitgestellt ist, die geneigte Fläche einer Innenseite eines Umfang der zweiten zahnförmigen Abschnitte (22) zugewandt ist.

## Revendications

1. Tambour de confection (3), comprenant une première partie de montage (31) et une seconde partie de montage (32), la première partie de montage (31) est raccordée à une première bague latérale (1), la seconde partie de montage (32) est raccordée à une seconde bague latérale (2), et la première bague latérale (1) et la seconde bague latérale (2) forment une paire de bagues latérales,
la première bague latérale (1) comprend une première partie annulaire (11), un premier côté de la première partie annulaire est raccordé à la première partie de montage (31), un second côté de la première partie annulaire est pourvu d'une pluralité de premières parties en forme de dent (12) le long d'une circonférence de la première partie annulaire (11), un premier écart de dent (13) est formé entre chaque paire de parties adjacentes des premières parties en forme de dent (12) ;
la seconde bague latérale (2) comprend un seconde partie annulaire (21), un premier côté de la seconde partie annulaire est raccordé à la seconde partie de montage (32), un second côté de la seconde partie annulaire est pourvu d'une pluralité de secondes parties en forme de dent (22) le long d'une circonférence de la seconde partie annulaire (21), un second écart de dent (23) est formé entre chaque paire de parties adjacentes des secondes parties en forme de dent (22) ;
un rayon circonférentiel extérieur des premières parties en forme de dent (12) est égal à un rayon circonférentiel extérieur des secondes parties en forme de dent (22), et les premières parties en forme de dent (12) sont capables d'être ajustées en croisement avec les secondes parties en forme de dent (22) pour former un corps cylindrique ayant une surface uniforme, **caractérisé en ce que** ;
lorsqu'elles sont ajustées en croisement, les premières parties en forme de dent (12) et les secondes parties en forme de dent (22) sont ajustées ensemble de façon serrée, et un écart entre chaque paire de parties adjacentes des premières parties en forme de dent (12) et des secondes parties en forme de dent (22) est d'1 à 2 mm ; chacune des premières parties en forme de dent (12) et des secondes parties en forme de dent (22) ont une épaisseur radial d de 5 à 8 mm.

2. Tambour de confection selon la revendication 1, **caractérisé en ce que** les bagues latérales sont raccordées au tambour de confection (3) de manière détachable.

3. Tambour de confection selon l'une quelconque des revendications 1 et 2, **caractérisé en ce que** la première bague latérale (1) et/ou la seconde bague latérale (2) sont pourvues d'un composant bloquant (14, 24), le composant bloquant (14, 24) est situé sur un côté intérieur de l'écart de dent (13, 23) entre chaque paire de parties adjacentes des parties en forme de dent.

4. Tambour de confection selon la revendication 1, **caractérisé en ce que** le composant bloquant (14) est au moins une bague de support (141, 142) agencée sur une circonférence intérieure des premières parties en forme de dent (12), et la bague de support est annulaire.

5. Tambour de confection selon la revendication 4, **caractérisé en ce que** chacune des secondes parties en forme de dent (22) a une extrémité en porte-à-faux (221), une surface latérale (222) de l'extrémité en porte-à-faux est prévue sous forme de surface inclinée, la surface inclinée (222) fait face à un côté intérieur d'une circonférence des secondes parties en forme de dent (22).

6. Tambour de confection selon la revendication 1, **caractérisé en ce que**,
la première partie annulaire (11) est pourvue d'une pluralité de premiers composants bloquants (143), chacun des premiers composants bloquants (143) est situé entre deux parties adjacentes des premières parties en forme de dent (12) et situé sur le côté intérieur du premier écarts de dent (13) ;
la seconde partie annulaire (21) est pourvue d'une pluralité de seconds composants bloquants (243), chacun des seconds composants bloquants (243) est situé entre deux parties adjacentes des secondes parties en forme de dent (22) et situé sur le côté intérieur des seconds écarts de dent (23).

7. Tambour de confection selon la revendication 6, **caractérisé en ce que**
chacune des premières parties en forme de dent (12) a une extrémité en porte-à-faux (121), une surface latérale (122) de l'extrémité en porte-à-faux est prévue sous forme de surface inclinée, la surface inclinée fait face à un côté intérieur d'une circonférence des premières parties en forme de dent (12) ;
chacun des secondes parties en forme de dent (22) a une extrémité en porte-à-faux (221), une surface latérale (222) de l'extrémité de porte-à-faux est prévue sous forme de surface inclinée, la surface inclinée fait face à un côté intérieur d'une circonférence des secondes parties en forme de dent (22).
